# FASCICULE DE BREVET EUROPEEN

(11) **EP 2 185 345 B1**
(45) Date de publication et mention de la délivrance du brevet: **04.07.2012**
(21) Numéro de dépôt: 08803673.6
(22) Date de dépôt: 04.09.2008
(51) Int. Cl.: B29C 70/20, B64C 1/06

(54) **CADRE DE STRUCTURE EN MATERIAU COMPOSITE ET FUSELAGE D'AERONEF COMPORTANT UN TEL CADRE**
STRUKTURRAHMEN EINES VERBUNDWERKSTOFFES UND FLUGZEUGRUMPF MIT DERARTIGEM RAHMEN
STRUCTURAL FRAME OF A COMPOSITE MATERIAL AND AIRCRAFT FUSELAGE INCLUDING SUCH FRAME

(30) Priorité: 07.09.2007 FR 0757431
(43) Date de publication de la demande: 19.05.2010
(73) Titulaire: AIRBUS OPERATIONS, 31060 Toulouse (FR)
(72) Inventeur: MARKOWSKI, Anaïs, F-31300 Toulouse (FR); BOUCHET, Eric, F-31840 Aussonne (FR); SOULA, Denis, F-31300 Toulouse (FR); ELDUAYEN, Marie, F-31300 Toulouse (FR)
(74) Mandataire: Ilgart, Jean-Christophe
(86) Numéro de dépôt international: PCT/EP2008/061703
(87) Numéro de publication internationale: WO 2009/030731

(56) Documents cités:
- WO-A-2005/115839
- US-A- 5 171 510
- US-A1- 2005 042 410
- US-A1- 2006 048 890

## Description

### DOMAINE TECHNIQUE

L'invention concerne un cadre de structure en matériau composite, conçu notamment pour présenter des performances mécaniques importantes tout en gardant une simplicité de réalisation.

Une application de l'invention concerne notamment les cadres de structure sur lesquels est fixé le revêtement extérieur d'un fuselage d'aéronef.

L'invention concerne également un fuselage d'aéronef comportant un ou plusieurs cadres selon l'invention.

### ÉTAT DE LA TECHNIQUE ANTÉRIEURE

Les structures de fuselage des aéronefs comprennent des cadres de structure régulièrement répartis sur toute la longueur du fuselage et sur lesquels est fixé un revêtement extérieur.

Les cadres de structure ont une forme sensiblement circulaire, par exemple annulaire ou ovale, ou présentant deux ou trois lobes, ou encore tout autre forme du même type. Ils comportent généralement en section une partie principale annulaire sensiblement plane qui s'étend selon une direction sensiblement perpendiculaire à l'axe du fuselage et deux parties secondaires en forme de talon ou de semelle reliées aux bords périphériques intérieur et extérieur de la partie principale.

Les cadres de structure ont pour fonction de renforcer la résistance mécanique du fuselage. Ils subissent des contraintes mécaniques importantes en traction ou en compression, notamment dans le sens circonférentiel, c'est-à-dire suivant une ligne circonférentielle médiane du cadre. Aussi, ils doivent être conçus de manière à présenter une rigidité circonférentielle importante, donc à présenter une faible déformation lors de fortes contraintes mécaniques. De plus, dans le cas d'une compression circonférentielle importante, ces cadres doivent présenter un flux critique de flambage élevé, c'est-à-dire éviter de se fléchir dans une direction perpendiculaire à la direction des contraintes mécaniques subies. Enfin, la réalisation de ces cadres en matériau composite doit présenter un nombre d'étapes limité de manière à être économique et rapide, tout en étant adaptée aux formes géométriques compliquées du cadre de structure.

Afin d'obtenir une rigidité importante vis-à-vis des contraintes mécaniques appliquées dans le sens circonférentiel, une solution consiste à disposer dans la partie principale des fibres unidirectionnelles orientée uniquement dans le sens circonférentiel. Toutefois cette disposition implique un flux critique de flambage faible. Le cadre de structure sera ainsi peu résistant face au phénomène de flambage. De plus, la disposition de fibres unidirectionnelles dans le sens circonférentiel est d'une réalisation particulièrement difficile à partir de nappes ou de tissus puisque la formation de plis est à éviter.

Pour éviter ces problèmes concernant les performances mécaniques et la réalisation, les cadres de structure sont habituellement réalisés à partir de fibres unidirectionnelles disposées dans la partie principale du cadre de manière à former un angle prédéterminé non nul par rapport à l'axe circonférentiel de la partie principale (cet axe circonférentiel étant défini comme la tangente à une ligne circonférentielle médiane du cadre en chacun des points de cette ligne). Cela permet d'éviter d'avoir à disposer des fibres formant un angle de 0 degré vis-à-vis de l'axe circonférentiel.

Par exemple, le document W02004/016844 décrit une préforme fibreuse de forme courbe qui présente une pluralité de fibres de renfort disposées selon un angle prédéterminé par rapport à l'axe circonférentiel. La préforme peut présenter une forme cylindrique ou annulaire plane. La partie principale de la préforme fibreuse comprend des fibres unidirectionnelles formant alternativement des angles de -45 degrés et de +45 degrés par rapport à l'axe circonférentiel de la partie principale, avec éventuellement interposition de fibres orientées à 90 degrés par rapport à cet axe.

Cependant, l'orientation des fibres dans la partie principale du cadre de structure telle que décrite dans ce document n'est pas totalement satisfaisante puisque la rigidité dans le sens circonférentiel du cadre de structure n'est pas optimale.

### EXPOSÉ DE L'INVENTION

L'invention a principalement pour objet un cadre de structure en matériau composite, notamment pour fuselage d'aéronef, conçu de manière à présenter des performances mécaniques importantes tout en gardant une simplicité de réalisation.

Selon l'invention, le résultat est obtenu au moyen d'un cadre de structure en matériau composite, notamment pour fuselage d'aéronef, comprenant une partie principale annulaire sensiblement plane, caractérisé en ce que la partie principale comporte des premiers ensembles de fibres unidirectionnelles formant un angle sensiblement compris entre 25 degrés et 35 degrés par rapport à l'axe circonférentiel du cadre, et des deuxièmes ensembles de fibres unidirectionnelles formant un angle sensiblement compris entre -35 degrés et -25 degrés par rapport à l'axe circonférentiel du cadre, les premiers et les deuxièmes ensembles étant régulièrement répartis sur l'épaisseur de la partie principale.

De préférence, l'orientation des premiers et des deuxièmes ensembles de fibres unidirectionnelles présente une symétrie par rapport à l'axe circonférentiel du cadre. Cela permet d'améliorer la simplicité de réalisation du cadre selon l'invention puisque la disposition des ensembles de fibres unidirectionnelles se fait selon un angle unique en valeur absolue suivant l'axe circonférentiel de la partie principale du cadre.

Avantageusement, la partie principale comporte des premiers ensembles de fibres unidirectionnelles formant un angle sensiblement de 30 degrés par rapport à l'axe circonférentiel du cadre, et des deuxièmes ensembles de fibres unidirectionnelles formant un angle sensiblement de -30 degrés par rapport à l'axe circonférentiel du cadre, les premiers et les deuxièmes ensembles étant régulièrement répartis sur l'épaisseur de la partie principale.

Cette orientation des ensembles de fibres unidirectionnelles de la partie principale du cadre permet d'augmenter la rigidité dans le sens circonférentiel de la partie principale par rapport à la rigidité obtenue pour des orientations de fibres à +45 degrés et -45 degrés par rapport à l'axe circonférentiel du cadre telles qu'utilisées dans l'art antérieur. De plus, cette disposition des ensembles de fibres unidirectionnelles de la partie principale du cadre permet de maintenir un flux critique de flambage à une valeur sensiblement identique à celle d'un flux critique de flambage obtenue dans le cas d'une disposition des ensembles de fibres à +45 degrés et selon -45 degrés par rapport à l'axe circonférentiel du cadre. Enfin, le cadre selon l'invention présente une simplicité de réalisation puisque seule la valeur de l'angle non nul formé par les ensembles de fibres unidirectionnelles par rapport à l'axe circonférentiel de la partie principale est modifiée. La disposition de fibres formant un angle de 0 degré par rapport à l'axe circonférentiel de la partie principale et parallèles entre elle nécessite de changer de technique de réalisation, ce qui présente des difficultés techniques et augmente les coûts de production.

Dans le mode de réalisation préféré de l'invention, le cadre comporte une partie secondaire reliée à un bord périphérique extérieur de la partie principale et s'étendant sensiblement perpendiculairement à la partie principale.

Avantageusement, la partie principale comporte des troisièmes ensembles de fibres unidirectionnelles formant un angle de 90 degrés par rapport à l'axe circonférentiel du cadre, disposés de façon alternée avec les premiers et les deuxièmes ensembles, ce qui permet d'augmenter la résistance au flambage.

Avantageusement, la partie secondaire comporte des fibres unidirectionnelles disposées sensiblement dans le sens circonférentiel du cadre, ce qui permet d'augmenter la rigidité du cadre dans le sens circonférentiel.

Les ensembles de fibres unidirectionnelles de la partie principale peuvent être disposés sous forme d'empilement de nappes ou disposés sous forme de tissus.

Dans le mode de réalisation préféré de l'invention, une deuxième partie secondaire est disposée sur un bord périphérique intérieur de la partie principale et s'étend sensiblement perpendiculairement à la partie principale. De manière à augmenter la rigidité du cadre dans le sens circonférentiel, la deuxième partie secondaire comporte des fibres unidirectionnelles disposées sensiblement dans le sens circonférentiel du cadre.

L'invention concerne également un fuselage d'aéronef, comprenant une ossature et un revêtement extérieur fixé sur celle-ci, l'ossature comportant des cadres de structure présentant les caractéristiques qui viennent d'être définies.

### BRÈVE DESCRIPTION DES DESSINS

On décrira à présent, à titre d'exemple non limitatif, un mode de réalisation préféré de l'invention, en se référant aux dessins annexés, dans lesquels :
La figure 1 est une vue en perspective représentant schématiquement un tronçon de fuselage d'aéronef intégrant des cadres réalisés conformément à l'invention ;
La figure 2 est une vue en perspective montrant un secteur de cadre selon un mode de réalisation préféré de l'invention, sur lequel est fixé le revêtement extérieur du fuselage.
La figure 3 est une vue en perspective d'un secteur de cadre selon un mode de réalisation préféré de l'invention.
La figure 4 illustre l'évolution du module d'Young de la partie principale du cadre de structure en fonction de la valeur de l'angle formé par les ensembles de fibres unidirectionnelles de la partie principale par rapport à l'axe circonférentiel du cadre.
La figure 5 illustre l'évolution du flux critique de flambage de la partie principale du cadre de structure en fonction de la valeur de l'angle formé par les ensembles de fibres unidirectionnelles de la partie principale par rapport à l'axe circonférentiel du cadre.

### EXPOSÉ DÉTAILLÉ DE MODES DE RÉALISATION PARTICULIERS

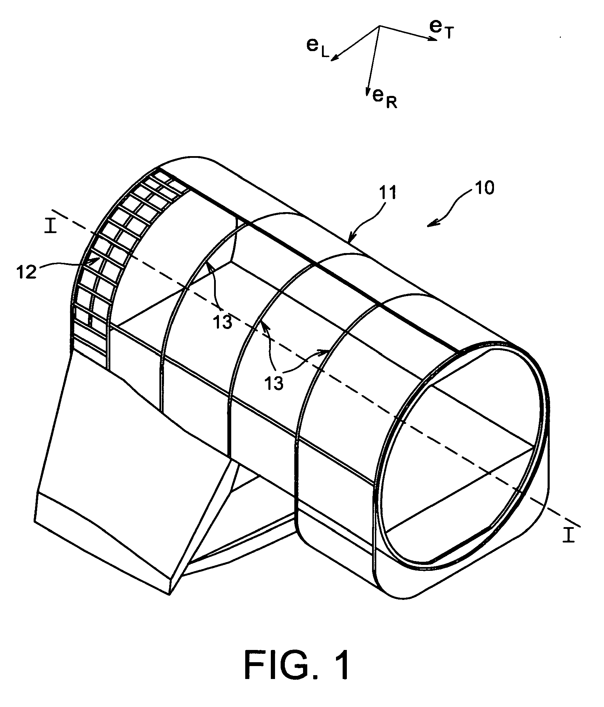

Comme l'illustre schématiquement la figure 1, le fuselage 10 d'un aéronef comprend une ossature sur laquelle est fixé un revêtement extérieur 11 renforcé par des longerons 12. Le fuselage 10 peut être de forme et de dimensions variables selon le type d'aéronef, sans sortir du cadre de l'invention.

L'ossature du fuselage 10 est formée principalement de cadres de structure 13. Les cadres de structure 13 sont régulièrement répartis sur toute la longueur du fuselage. Chacun d'entre eux est disposé selon une section du fuselage, perpendiculairement à l'axe longitudinal I-I du fuselage, et présente globalement une forme circulaire sensiblement annulaire ou ovale, ou présentant deux ou trois lobes, ou encore tout autre forme du même type. Un repère orthogonal direct en coordonnées cylindriques (e_{R}, e_{T}, e_{L}) est présenté dans la figure 1. e_{R} donne la direction radiale d'un point appartenant au fuselage, e_{T} la direction tangentielle ou circonférentielle et e_{L} est la direction longitudinale, e_{L} coïncidant avec l'axe longitudinal I-I du fuselage.

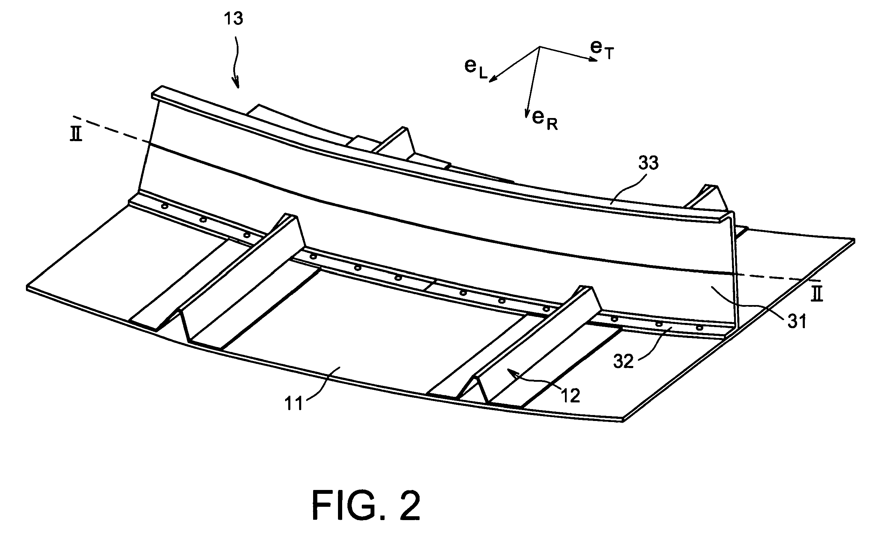

La figure 2 présente un secteur de cadre de structure 13 selon un mode de réalisation préféré de l'invention. Le cadre de structure 13 supporte le revêtement extérieur 11 du fuselage. Le revêtement extérieur 11 du fuselage est renforcé sur sa face intérieure par des longerons 12 disposés parallèlement à l'axe longitudinal I-I du fuselage et régulièrement espacés le long du périmètre du fuselage.

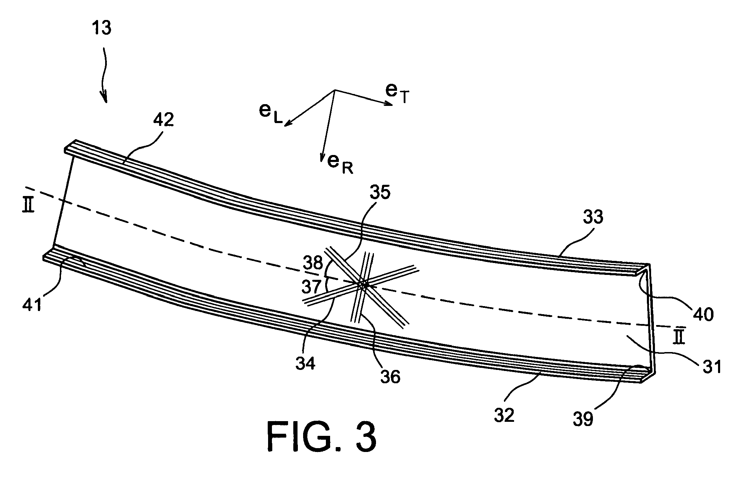

La figure 3 présente en détail un secteur de cadre de structure 13 selon un mode de réalisation préféré de l'invention. Dans ce mode de réalisation, le cadre de structure 13 comprend une partie principale 31, une partie secondaire extérieure 32 et une partie secondaire intérieure 33. Ainsi, ce mode de réalisation concerne un cadre de structure dont la section est approximativement en forme de C. Dans un autre mode de réalisation non représenté, la partie secondaire intérieure 33 n'existe pas et le cadre de structure 13 présente alors une section sensiblement en forme de L.

La partie principale 31 du cadre de structure 13 est constituée par une plaque sensiblement plane, de forme annulaire, dont le plan médian est sensiblement perpendiculaire à l'axe longitudinal I-I du fuselage. La partie principale 31 présente une forme courbe le long d'une ligne circonférentielle médiane II-II. La direction e_{T} est tangente en chaque point à la ligne II-II et définit ainsi en chaque point de la ligne II-II l'axe circonférentiel du cadre 13.

Le cadre de structure 13 est réalisé en matériau composite. Il est réalisé selon les techniques habituellement utilisées pour la fabrication de pièces de ce type. Parmi ces techniques, on citera notamment les techniques de drapage qui consistent à superposer des ensembles de fibres unidirectionnelles ou de tissus pré-imprégnés de résine, puis à polymériser la résine.

La partie principale 31 comporte plusieurs ensembles de fibres unidirectionnelles qui s'étendent sur toute la largeur de la partie principale 31, entre ses bords périphériques intérieur 40 et extérieur 39.

Ces ensembles comprennent plusieurs premiers ensembles de fibres unidirectionnelles 34 qui forment un angle non nul prédéterminé 37 avec l'axe circonférentiel du cadre 13. Conformément à l'invention, l'angle 37 est compris dans l'intervalle allant de +25 degrés à +35 degrés. L'angle choisi est avantageusement sensiblement égal à +30 degrés.

Les ensembles de fibres unidirectionnelles de la partie principale 31 comprennent également plusieurs seconds ensembles de fibres unidirectionnelles 35 formant un angle non nul prédéterminé 38 avec l'axe circonférentiel du cadre 13. Conformément à l'invention, cet angle 38 est compris dans l'intervalle allant de -35 degrés à -25 degrés. Il est de préférence sensiblement égal à -30 degrés.

Les ensembles de fibres 34 et les ensembles de fibres 35 sont régulièrement répartis sur l'épaisseur de la partie principale 31, c'est-à-dire selon l'axe I-I du fuselage 10.

Dans le mode de réalisation préféré de l'invention, les fibres unidirectionnelles des premiers ensembles de fibres 34 et des deuxièmes ensembles de fibres 35 sont disposées de manière sensiblement symétrique par rapport à l'axe circonférentiel du cadre 13, de sorte que les angles 37 et 38 sont sensiblement égaux en valeur absolue.

De façon facultative, des troisièmes ensembles de fibres unidirectionnelles 36 peuvent être disposés dans la partie principale 31 sensiblement perpendiculairement à l'axe circonférentiel du cadre 13, c'est-à-dire selon la direction radiale e_{R} du fuselage. Dans ce cas, les premiers, deuxièmes et troisièmes ensembles de fibres sont régulièrement répartis sur l'épaisseur de la partie principale 31, c'est-à-dire selon l'axe I-I du fuselage 10.

Dans le mode de réalisation préféré illustré sur les figures 2 et 3, le cadre de structure 13 comporte un partie secondaire extérieure 32 reliée à un bord périphérique extérieur 39 de la partie principale 31. La partie secondaire extérieure 32 a la forme d'une plaque qui s'étend sensiblement perpendiculairement à la partie principale 31, c'est-à-dire dans le sens longitudinal e_{L} du fuselage 10, sur toute la longueur du bord périphérique extérieur 39.

De façon facultative, la partie secondaire extérieure 32 peut comporter des ensembles de fibres unidirectionnelles 41 disposés dans le sens circonférentiel du cadre 13. Cette partie secondaire extérieure 32 permet de fixer le cadre de structure 13 au revêtement extérieur 11 du fuselage 10, par exemple par rivetage. La présence des ensembles de fibres unidirectionnelles 41 disposés dans la direction décrite permet d'augmenter la rigidité du cadre de structure 13.

Selon le mode de réalisation préféré de l'invention, le cadre de structure 13 comporte également une partie secondaire intérieure 33 reliée à un bord périphérique intérieur 40 de la partie principale 31 et qui s'étend sensiblement perpendiculairement à la partie principale 31, c'est-à-dire dans le sens longitudinal e_{L} du fuselage. La partie secondaire intérieure 33 peut également comporter des ensembles de fibres unidirectionnelles 42 disposés dans le sens circonférentiel du cadre 13. La présence des ensembles de fibres unidirectionnelles 42 disposés dans la direction décrite permet d'augmenter la rigidité du cadre de structure 13.

Les ensembles de fibres unidirectionnelles 34, 35 et éventuellement 36 de la partie principale 31 sont réalisés sous forme d'empilement de nappes ou de tissus. Lorsqu'ils existent, les ensembles de fibres unidirectionnelles 41, 42 des parties secondaires 32, 33 sont réalisés sous forme de nappes empilées.

La nature des fibres utilisées dans les différents ensembles de fibres 34, 35 et éventuellement 36, 41, 42 des parties principale 31 et secondaires 32, 33 ainsi que la nature de la résine dans laquelle sont noyées les fibres sont choisies selon l'application envisagée parmi les fibres et les résines utilisées habituellement dans le domaine des matériaux composites. Ainsi, les fibres peuvent être des fibres de carbone, des fibres de verre ou des fibres aramides et la résine une résine thermodurcissable telle qu'une résine phénolique ou de type époxy.

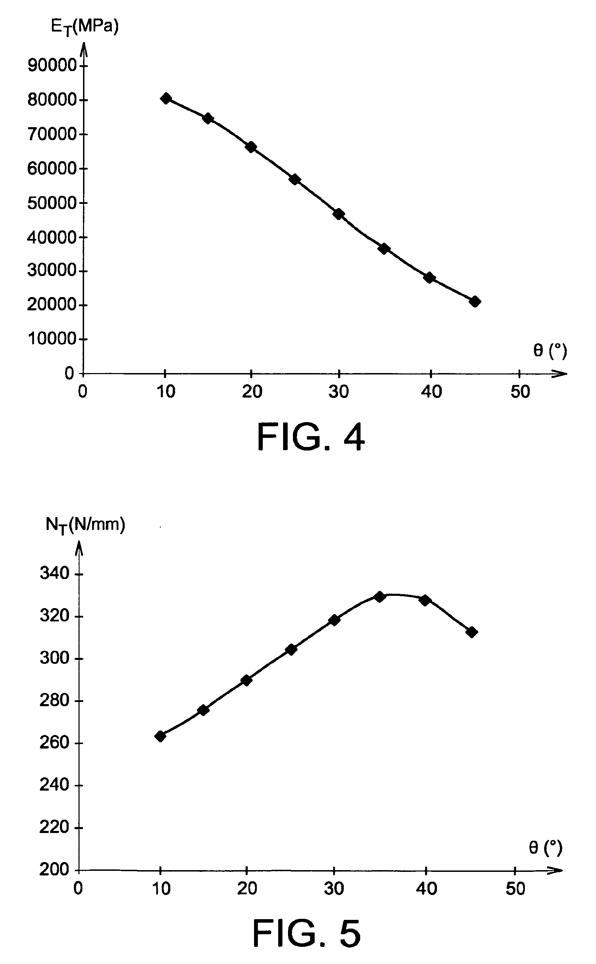

Les figures 4 et 5 donnent un exemple de l'influence de l'orientation des ensembles de fibres unidirectionnelles de la partie principale 31 du cadre 13 par rapport à l'axe circonférentiel du cadre 13 sur les performances mécaniques de la partie principale 31 du cadre 13. La figure 4 illustre l'évolution du module d'Young de la partie principale 31 E_{T} (en MPa) mesuré dans le sens circonférentiel du cadre 13, en fonction de l'angle θ (en degrés) d'orientation des fibres par rapport à l'axe circonférentiel du cadre. La figure 5 montre l'évolution du flux critique de flambage de la partie principale 31 N_{T} (en N/mm) mesuré dans le sens circonférentiel du cadre 13, en fonction de l'angle θ (en degrés) d'orientation des fibres par rapport à l'axe circonférentiel du cadre.

Dans cet exemple, +θ correspond à l'angle 37 et -θ correspond à l'angle 38. Une plaque plane de 150 mm de long et de 70 mm de haut et formée par drapage d'une succession de 8 ensembles de fibres unidirectionnelles orientées suivant -θ/90°/+θ/-0/+θ/+θ/90°/-θ est considérée dans le cadre de cet exemple. L'angle θ varie de 10 degrés à 45 degrés. La figure 4 montre que, sans surprise, le module d'Young E_{T} augmente continûment à mesure que l'angle θ diminue. Sa valeur pour θ=30° est ainsi deux fois plus importante que pour θ=45°. La figure 5 montre que, de manière surprenante, l'évolution du flux critique de flambage N_{T} présente un maximum pour θ=30° environ. De plus, pour un angle θ sensiblement compris entre 25 degrés et 45 degrés, N_{T} est sensiblement égal ou supérieur à sa valeur correspondant à θ=45°. Il est donc avantageux d'orienter les ensembles de fibres unidirectionnelles 34 et 35 de la partie principale 31 suivant un angle compris entre +25 degrés et +35 degrés pour l'angle 37 et entre -35 degrés et -25 degrés pour l'angle 38. En effet, les performances mécaniques de la partie principale 31 du cadre 13 sont améliorées tout en gardant une simplicité de réalisation.

Le cadre de structure 13 conforme à l'invention est réalisé à partir d'une technique de drapage connue de l'homme du métier. Notons toutefois que les parties secondaires extérieure 32 et intérieure 33 peuvent être réalisées selon la technique décrite dans le document W02007/074179, différente des techniques classiques selon lesquelles les parties secondaires sont liées à la partie principale par adjonction de films de colle entre ces éléments lors de la polymérisation en autoclave. Dans la technique décrite dans le document W02007/074179, les parties secondaires du cadre de structure correspondent aux bordures d'un ensemble monolithique comprenant la partie principale et présentant la forme voulue. Les parties secondaires sont obtenues par déformation sous vide et à haute température.

## Revendications

1. Cadre de structure (13) en matériau composite, notamment pour fuselage (10) d'aéronef, comprenant une partie principale (31) annulaire sensiblement plane, **caractérisé en ce que** la partie principale (31) comporte des premiers ensembles de fibres unidirectionnelles (34) formant un angle (37) sensiblement compris entre 25 degrés et 35 degrés par rapport l'axe circonférentiel du cadre (13), et des deuxièmes ensembles de fibres unidirectionnelles (35) formant un angle (38) sensiblement compris entre -35 degrés et -25 degrés par rapport à l'axe circonférentiel du cadre (13), les premiers et les deuxièmes ensembles étant régulièrement répartis sur l'épaisseur de la partie principale.

2. Cadre de structure (13) en matériau composite selon la revendication 1, **caractérisé en ce que** l'orientation des premiers (34) et deuxièmes (35) ensembles de fibres unidirectionnelles présente une symétrie par rapport à l'axe circonférentiel du cadre (13).

3. Cadre de structure (13) en matériau composite selon l'une quelconque des revendications 1 à 2, **caractérisé en ce que** la partie principale (31) comporte des premiers ensembles de fibres unidirectionnelles (34) formant un angle (37) sensiblement de 30 degrés par rapport à l'axe circonférentiel du cadre (13), et des deuxièmes ensembles de fibres unidirectionnelles (35) formant un angle (38) sensiblement de -30 degrés par rapport à l'axe circonférentiel du cadre (13).

4. Cadre de structure (13) en matériau composite selon l'une quelconque des revendications 1 à 3, **caractérisé en ce que** le cadre comporte une partie secondaire (32) située sur un bord périphérique extérieur (39) de la partie principale (31) et s'étendant sensiblement perpendiculairement à la partie principale (31).

5. Cadre de structure (13) en matériau composite selon l'une quelconque des revendications 1 à 4, **caractérisé en ce que** la partie principale (31) comporte des troisièmes ensembles de fibres unidirectionnelles (36) formant un angle sensiblement de 90 degrés par rapport à l'axe circonférentiel du cadre (13).

6. Cadre de structure (13) en matériau composite selon l'une quelconque des revendications 1 à 5, **caractérisé en ce que** la partie secondaire (32) comporte des ensembles de fibres unidirectionnelles (41) disposés sensiblement dans le sens circonférentiel du cadre (13).

7. Cadre de structure (13) en matériau composite selon l'une quelconque des revendications 1 à 6, **caractérisé en ce que** le cadre comporte une deuxième partie secondaire (33) disposée sur un bord périphérique intérieur (40) de la partie principale (31) et qui s'étend sensiblement perpendiculairement à la partie principale (31).

8. Cadre de structure en matériau composite selon la revendication 7, **caractérisé en ce que** la deuxième partie secondaire (33) comporte des ensembles de fibres unidirectionnelles (42) disposés sensiblement dans le sens circonférentiel du cadre (13).

9. Fuselage d'aéronef, comprenant une ossature (10) et un revêtement extérieur (11) fixé sur celle-ci, l'ossature (10) comportant au moins un cadre de structure (13) selon l'une quelconque des revendications précédentes.

## Claims

1. Structural frame (13) made from a composite material, designed particularly for an aircraft fuselage (10), comprising an approximately plane annular main part (31), **characterised in that** the main part (31) comprises first sets of single-directional fibres (34) forming an angle (37) between approximately 25 degrees and 35 degrees from the circumferential axis of the frame (13), and second sets of single-directional fibres (35) forming an angle (38) between approximately -35 degrees and -25 degrees from the circumferential axis of the frame (13), the first and second sets being uniformly distributed over the thickness of the main part.

2. Structural frame (13) made from a composite material according to claim 1, **characterised in that** the orientations of the first (34) and second (35) sets of single-directional fibres are symmetric about the circumferential axis of the frame (13).

3. Structural frame (13) made from a composite material according to either of claims 1 and 2, **characterised in that** the main part (31) comprises first sets of single-directional fibres (34) forming an angle (37) equal to approximately 30 degrees from the circumferential axis of the frame (13), and second single-directional fibre sets (35) forming an angle (38) equal to approximately -30 degrees from the circumferential axis of the frame (13).

4. Structural frame (13) made from a composite material according to any one of claims 1 to 3, **characterised in that** the frame comprises a secondary part (32) located on an outer peripheral edge (39) of the main part (31) and extending approximately perpendicular to the main part (31).

5. Structural frame (13) made from a composite material according to any one of claims 1 to 4, **characterised in that** the main part (31) comprises third sets of single-directional fibres (36) forming an angle equal to approximately 90 degrees relative to the circumferential axis of the frame (13).

6. Structural frame (13) made from a composite material according to any one of claims 1 to 5, **characterised in that** the secondary part (32) comprises sets of single-directional fibres (41) arranged approximately in the circumferential direction of the frame (13).

7. Structural frame (13) made from a composite material according to any one of claims 1 to 6, **characterised in that** the frame comprises a second secondary part (33) arranged on an inner peripheral edge (40) of the main part (31) and that extends approximately perpendicular to the main part (31).

8. Structural frame made from a composite material according to claim 7, **characterised in that** the second secondary part (33) comprises sets of single-directional fibres (42) arranged approximately in the circumferential direction of the frame (13).

9. Aircraft fuselage comprising a framework (10) and an outer skin (11) fixed onto the framework, the framework (10) comprising at least one structural frame (13) according to any one of the previous claims.

## Patentansprüche

1. Strukturrahmen (13) aus Verbundwerkstoff, insbesondere für einen Flugzeugrumpf (10), mit einem ringförmigen, im Wesentlichen planen bzw. flachen Hauptteil (31), **dadurch gekennzeichnet, dass** der Hauptteil (31) umfasst: erste Gruppen von unidirektionalen Fasern (34), die in Bezug auf die Umfangsachse des Rahmens (13) einen im Wesentlichen zwischen 25 Grad und 35 Grad enthaltenen Winkel (37) bilden, und zweite Gruppen von unidirektionalen Fasern (35), die in Bezug auf die Umfangsachse des Rahmens (13) einen im Wesentlichen zwischen -35 Grad und -25 Grad enthaltenen Winkel (38) bilden, wobei die ersten und die zweiten Gruppen gleichmäßig über die Dicke des Hauptteils verteilt sind.

2. Strukturrahmen (13) aus Verbundwerkstoff nach Anspruch 1, **dadurch gekennzeichnet, dass** die Ausrichtung der ersten (34) und zweiten (35) Gruppen unidirektionaler Fasern symmetrisch sind in Bezug auf die Umfangsachse des Rahmens (13).

3. Strukturrahmen (13) aus Verbundwerkstoff nach einem der Ansprüche 1 bis 2, **dadurch gekennzeichnet, dass** der Hauptteil (31) erste Gruppen unidirektionaler Fasern (34) umfasst,
die in Bezug auf die Umfangsachse des Rahmens (13) einen Winkel (37) von im Wesentlichen 30 Grad bilden, sowie zweite Gruppen unidirektionaler Fasern (35), die in Bezug auf die Umfangsachse des Rahmens (13) einen Winkel (38) von im Wesentlichen -30 Grad bilden.

4. Strukturrahmen (13) aus Verbundwerkstoff nach einem der Ansprüche 1 bis 3, **dadurch gekennzeichnet, dass** der Rahmen einen an einem Außenumfangsrand (39) des Hauptteils (31) befindlichen und sich im Wesentlichen senkrecht zum Hauptteil (31) erstreckenden Sekundärteil (32) umfasst.

5. Strukturrahmen (13) aus Verbundwerkstoff nach einem der Ansprüche 1 bis 4, **dadurch gekennzeichnet, dass** der Hauptteil (31) dritte Gruppen unidirektionaler Fasern (36) umfasst, die in Bezug auf die Umfangsachse des Rahmens (13) einen Winkel von im Wesentlichen 90 Grad bilden.

6. Strukturrahmen (13) aus Verbundwerkstoff nach einem der Ansprüche 1 bis 5, **dadurch gekennzeichnet, dass** der Sekundärteil (32) Gruppen unidirektionaler, im Wesentlichen in der Umfangsrichtung des Rahmens (13) angeordneter Fasern (41) umfasst.

7. Strukturrahmen (13) aus Verbundwerkstoff nach einem der Ansprüche 1 bis 6, **dadurch gekennzeichnet, dass** der Rahmen einen zweiten Sekundärteil (33) umfasst, der an einem Innenumfangsrand (40) des Hauptteils (31) angeordnet ist und sich im Wesentlichen senkrecht zu dem Hauptteil (31) erstreckt.

8. Strukturrahmen aus Verbundwerkstoff nach Anspruch 7, **dadurch gekennzeichnet, dass** der zweite Sekundärteil Gruppen unidirektionaler, im Wesentlichen in der Umfangsrichtung des Rahmens (13) angeordneter Fasern (42) umfasst.

9. Flugzeugrumpf, umfassend ein Traggerüst (10) und eine an diesem befestigte Außenverkleidung (11), wobei das Traggerüst (10) wenigstens einen Strukturrahmen (13) nach einem der vorhergehenden Ansprüche umfasst.
